# EUROPÄISCHE PATENTSCHRIFT

(11) **EP 1 872 848 B1**
(45) Veröffentlichungstag und Bekanntmachung des Hinweises auf die Patenterteilung: **23.09.2009**
(21) Anmeldenummer: 06013181.0
(22) Anmeldetag: 27.06.2006
(51) Int. Cl.: B01F 9/06, B01F 15/00, B01J 19/00, B01J 19/02, B01J 19/28, C08B 11/20, C08B 17/06

(54) **Doppelkonusmischer mit Stromstörern und dessen Verwendung**
Biconical mixer comprising flow breaker elements, and its use
Mélangeur biconique comprenant des éléments de brise-lames ainsi que son utilisation

(43) Veröffentlichungstag der Anmeldung: 02.01.2008
(73) Patentinhaber: Dow Global Technologies Inc., Midland, MI 48674 (US)
(72) Erfinder: Kowollik, Martin, 29683 Bad Fallingbostel (DE); Rogenhofer, Andreas, 29683 Bad Fallingbostel (DE); Dannhorn, Wolfgang Dr., 29614 Soltau (DE); Klohr, Erik-Andreas Dr., 29664 Walsrode (DE)
(74) Vertreter: Polypatent

(56) Entgegenhaltungen:
- DE-A1- 1 607 767
- DE-A1- 2 012 689
- DE-B- 1 197 064
- DE-B1- 1 954 563
- GB-A- 496 420
- US-A- 1 395 171
- US-A- 4 403 865
- DOENGES R: "ENTWICKLUNGEN EN DER HERSTELLUNG UND ANWENDUNG VON CELLULOSEETHERN" DAS PAPIER, E. ROETHER KG DARMSTADT, DE, Bd. 51, Nr. 12, Dezember 1997 (1997-12), Seiten 653-660, XP000726080 ISSN: 0031-1340

## Beschreibung

Die vorliegende Erfindung betrifft einen neuartigen Doppelkonusmischer, in gegebenenfalls emaillierter Ausführung sowie dessen Einsatz bei der Herstellung und/oder Verarbeitung von Polysaccharidprodukten, bevorzugt auf Cellulosebasis.

Zu den technisch bedeutenden Polysaccharidprodukten gehören Cellulosederivate und insbesondere Methylhydroxyalkylcellulosen, wie z.B. Methylhydroxyethylcellulosen und Methylhydroxypropylcellulosen, Natrium-Carboxymethylcellulosen und Ethylhydroxyethylcellulosen. Ihre Herstellung, Eigenschaften und Anwendungen werden z.B. in Ullmann's Encyclopedia of Industry Chemistry, 5th Edition (1986), Volume A5 Page 461-488, VCH Verlagsgesellschaft Weinheim beschrieben.

Methylhydroxyalkylcellulosen werden aufgrund ihrer hervorragender Eigenschaften in unterschiedlichsten Anwendungsbereichen eingesetzt.

Einerseits werden sie in technischen Anwendungen z.B. als Verdicker, Kleber, Bindemittel, Dispergiermittel, Wasserrückhaltemittel, Schutzkolloid, Stabilisator, Suspendiermittel, Emulgiermittel, Filmbindemittel und als Konsistenzregler und Verarbeitungshilfsmittel in mineralischen und dispersionsbasierenden Baustoffsystemen eingesetzt. Andererseits finden sie in sensitiven Anwendungen, beispielsweise bei der Herstellung von kosmetischen und pharmazeutischen Präparaten, beim Coating von Tabletten, in Augentropfensuspensionen, in Kontaktlinsenreiniger und dergleichen oder bei der Herstellung von Lebensmitteln Verwendung, in denen Celluloseether gefordert werden, die sich durch besonders hohe Reinheit auszeichnen (vgl. auch WO 00/32637). Hohe Reinheit bedeutet die Einhaltung der entsprechenden pharmazeutischen Regularien z.B. hinsichtlich Chargenreinheit, pH-Wert-Stabilität, Homogenität der Charge, Viskosität der Lösung. Darüber hinaus müssen für sensitive Anwendungen weitere rechtliche Regelungen und darüber hinausgehende Kundenanforderungen eingehalten werden. Zum Dritten finden Methylhydroxyalkylcellulosen in hochwertigen technischen Anwendungen Verwendung, wie bei der Herstellung besonderer Keramiken und der Suspensions-Polymerisation, die sich ebenfalls durch besonders hohe Reinheit auszeichnen. Hohe Reinheit bedeutet in diesen Anwendungen insbesondere geringe Verschmutzungen physikalischer Art.

Im Verlauf des Herstellungsprozesses oben beschriebener Methylhydroxyalkylcellulosen ist es auch notwendig, die Methylhydroxyalkylcellulosen in Reaktoren und Mischern verschiedener Bauarten zu behandeln, um z.B. die pH-Wert-Stabilität oder die Homogenität einer Charge sicherzustellen oder Anteile eines Pulvers oder Granulates in die bereits pulver- oder granulatförmige Methylhydroxyalkylcellulose einzumischen.

In der Literatur ist hierzu die entsprechende Mischtheorie beschrieben und sind beispielhaft verschiedenste Bauarten von Mischern dargestellt, siehe z.B. Matthias Stieß "Mechanische Verfahrenstechnik" 2. Aufl. 1995, Springer Verlag oder "Ullmann's Encyclopedia of Industry Chemistry", 5th Edition (1988), Volume B2 27 Mixing of Solids, VCH Verlagsgesellschaft Weinheim.

Für die Herstellung von Methylhydroxyalkylcellulose für sensitive und hochwertige technische Anwendungen werden wegen der besonderen Reinheitsanforderungen vorzugsweise Mischer eingesetzt, die u.a. eine gute Restentleerung und Reinigung des Mischers zulassen und von denen keine Verunreinigung der zu mischenden Komponenten erfolgt. Für die Aufgabenstellung eignen sich besonders Mischer mit bewegtem Mischbehälter, insbesondere Doppelkonusmischer.

Da bei der Herstellung niedrigstviskoser Methylhydroxyalkylcellulose für sensitive und hochwertige technische Anwendungen auch stark saure oder ätzende Stoffe zum Einsatz kommen können, müssen die eingesetzten Mischer bzw. die Materialen, aus denen die produktberührten Teile des Mischers bestehen, zudem beständig gegen diese stark sauren oder ätzenden Stoffe sein. In industriellen Herstellungsprozessen werden hierzu in der Regel emaillierte oder verglaste Behälter eingesetzt. In der Technik ist es allgemein bekannt, dass für die Herstellung und industrielle Verwendung emaillierter oder verglaster Behälter besondere Einschränkungen gelten, damit die Emailschicht so auf die Stahlwandung des Behälters aufgebracht werden kann, dass sie eine dauerhafte und innige Verbindung eingeht und diese bei dem bestimmungsgemäßen Gebrauch des Behälters auch beibehält. Hierzu ist es u.a. wichtig, dass der zu emaillierende Behälter eine genügend einfache Geometrie aufweist. Von den verschiedenen Mischerbauarten sind für die Emaillierung insbesondere Doppelkonusmischer geeignet.

Die in der Technik eingesetzten Doppelkonusmischer erfüllen die oben beschriebenen Aufgaben hinsichtlich Restentleerung, Reinigbarkeit, Möglichkeit der emaillierten Ausführung, etc. in der Regel ausreichend gut. Ein großer Nachteil besteht jedoch in der nur mäßigen Mischgüte insbesondere in axialer Richtung. Z.B. in "Enhanced mixing in double-cone blenders", Dean Brone, F.J. Muzzio, Powder Technology 110 (2000) 179-189, ist dieses schlechte Mischverhalten ausführlich beschrieben. Hier ist zudem beschrieben, dass zentrale, großflächige Einbauten eine verbesserte axiale Durchmischung bewirken können. Diese zentralen, großflächigen Einbauten sind für den industriellen Einsatz jedoch nicht geeignet, da sie den oben beschriebenen Eigenschaften des Doppelkonusmischers, wie z.B. Restentleerung, Reinigbarkeit, Möglichkeit der emaillierten Ausführung, entgegenstehen.

Beim Rühren und Mischen in verschiedensten Behältern wie z.B. Reaktoren, Mischern, Trocknern, etc. werden in der Technik oftmals Stromstörer oder Strombrecher eingesetzt. Auch ihr Einsatz in emaillierten Reaktoren ist grundsätzlich bekannt und in WO 2004/073847 beschrieben. Charakteristisches Merkmal der beschriebenen Stromstörer oder Strombrecher ist, dass sie ein so genanntes Gegenrühren bewirken. Doppelkonusmischer als Reaktoren sind in WO 2004/073847 nicht genannt. Ferner wird auch kein Bezug zur Polysaccharidherstellung und Verarbeitung hergestellt.

In dem US-Patent 1,395,171 wird ein Doppelkonusmischer umfassend einen Mischbehälter aus einer Trommel mit achteckigem Mittelteil und je Öffnung einen angesetzten Konus offenbart, wobei der Mischbehälter im Inneren Einbauten in Form von Klingen aufweist. Dieser Mischer soll zur Düngemittelmischung eingesetzt werden, wobei die eingebauten Klingen den zu mischenden Dünger aufbrechen sollen.

Dringender Wunsch besteht in der Bereitstellung eines auch gegenüber aggressivem chemischen Milieu beständigen Doppelkonusmischers, welcher gegenüber konventionellen, gegebenenfalls emaillierten Aggregaten des Standes der Technik verbesserte Mischeigenschaften, insbesondere in axialer Richtung, zur wirtschaftlichen industriellen Herstellung homogener, pH-neutraler niedrigstviskoser Polysaccharidderivate, insbesondere Methylhydroxyalkylcellulosen gewährleistet.

Es wurde nun gefunden, dass sich der bekannte Nachteil von Doppelkonusmischern hinsichtlich ihrer relativ schlechten Axialvermischung durch den Einsatz von Stromstörern, wie sie in Rührkesseln bereits bekannt sind, signifikant verbessern lässt.

Gegenstand der Erfindung ist daher ein Doppelkonusmischer umfassend im Inneren Stromstörende Einbauten gemäß Anspruch 1.

Unter Doppelkonusmischern im Rahmen der vorliegenden Erfindung werden solche Apparate verstanden, bei denen ein Mischbehälter bestehend aus einer Trommel mit zylindrischem Mittelteil und je einem angesetzten Konus um eine horizontale Achse rotiert. Die Anordnung der Behälterwände und die Rotation der Trommel bewirken dabei üblicherweise eine zufrieden stellende gleichmäßige, drei-dimensionale Umschichtung des Mischgutes. Dabei wird das Mischgut durch Fliehkräfte und Reibungskräfte nach oben gehoben und rutscht dann, entsprechend seinem Böschungswinkel nach unten. Bei höheren Drehzahlen wird das Mischgut weiter angehoben, um dann in einer Wurfparabel nach unten zu fallen. Dabei erhöht sich die Mischintensität bei gleichzeitig stark anwachsendem Leistungsbedarf. Durch den gleichzeitigen Einsatz von Stromstörern wird nun eine Verbesserung der Vermischung in Richtung der Rotationsachse (= axiale Richtung) erreicht.

Die Stromstörer verbesseren die Mischeffizienz, indem sie z.B. die Turbulenz innerhalb des Mischgutes erhöhen, die bei der Rotation auftretenden Flieh- und Reibungskräfte unterstützt und insbesondere, bei geeigneter Anordnung, eine axiale Strömungsrichtung des Mischgutes erzwingen.

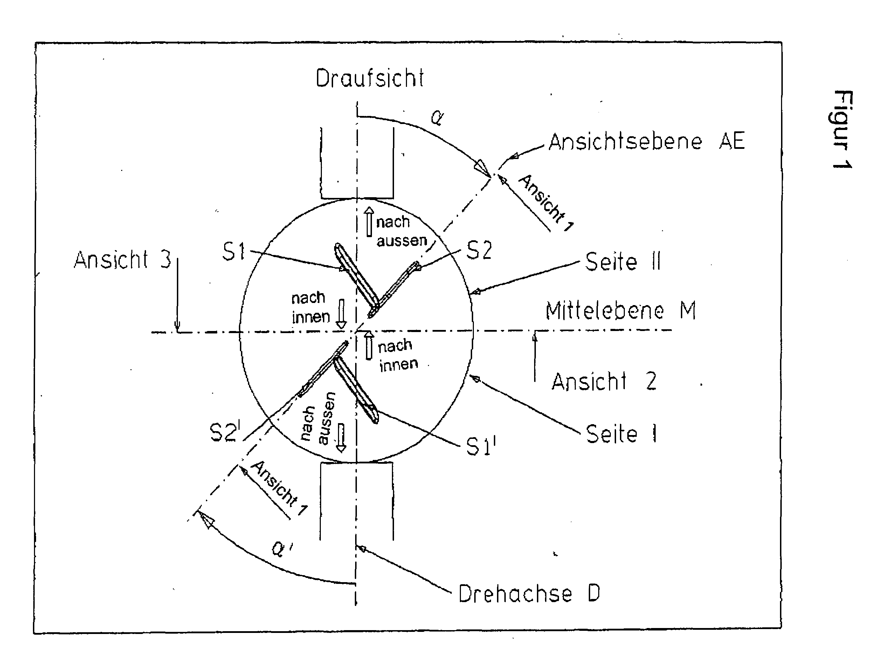

In Figur 1 ist die Drehachse D des Doppelkonusmischers und die senkrecht zur Drehachse D stehende Mittelebene M (von oben betrachtet) des Doppelkonusmischers dargestellt, durch die der Doppelkonusmischer in die beiden Seiten I und II teilt wird. Grundsätzlich können die Stromstörer so angeordnet werden, dass sie eine axiale Förderwirkung nach außen, d.h. von der Mittelebene M weg (vgl. Figur 1), oder eine axiale Förderwirkung nach innen, d.h. zu der Mittelebene M hin (vgl. Figur 1), bewirken. Zudem können die Stromstörer grundsätzlich symmetrisch oder unsymmetrisch zur Mittelebene M angeordnet werden. Symmetrisch bedeutet in diesem Zusammenhang, dass die Stromstörer auf den beiden Seiten I und II der Mittelebene M in Art und/oder Anzahl so angeordnet sind, dass die Stromstörer mit jeweils gleicher Stärke der Förderwirkung auf beiden Seiten I und II nach außen oder mit jeweils gleicher Stärke der Förderwirkung auf beiden Seiten I und II nach innen fördern. Dies kann z.B. dadurch erreicht werden, dass auf beiden Seiten I und II der Mittelebene M gleich viele und gleichartige Stromstörer angeordnet sind und dass diese Stromstörer auf beiden Seiten I und II der Mittelebene M aufgrund ihrer Anordnung mit gleicher axialer Förderwirkung, d.h. Stärke der Förderung und gleicher Förderrichtung, jeweils axial nach außen oder jeweils axial nach innen, fördern (vgl. Figur 1). Unsymmetrisch bedeutet in diesem Zusammenhang, dass die Stromstörer auf den beiden Seiten I und II der Mittelebene M in Art und/oder Anzahl so angeordnet sind, dass die Stromstörer der einen Seite nach außen und die Stromstörer der anderen Seite nach innen fördern. Diese unsymmetrische Anordnung kann durch verschiedene Kombinationen von Stromstörern erreicht werden.

Bevorzugt umfasst der erfindungsgemäße Doppelkonusmischer 1 bis 16, besonders bevorzugt 2 bis 8, ganz besonders bevorzugt 4 Stromstörer.

In einer besonders bevorzugten Ausführungsform wird die Anzahl der eingesetzten Stromstörer so gewählt, dass beide Konus jeweils die gleiche Anzahl an Stromstörern aufweisen und innerhalb eines Konus die stromstörenden Einbauten so angeordnet sind, dass in den gleichgroßen Halbräumen, in die ein Konus durch eine senkrecht zur Drehachse D stehende Mittelebene M geteilt wird, die jeweils gleiche Anzahl an Stromstörern vorliegt.

Zum Erreichen der gewünschten Axialvermischung werden Stromstörer des nachfolgend beschriebenen Typen S1 und/oder S2 verwendet, die jeweils einzeln oder auch in Kombination miteinander in den erfindungsgemäßen Doppelkonusmischern eingesetzt werden .

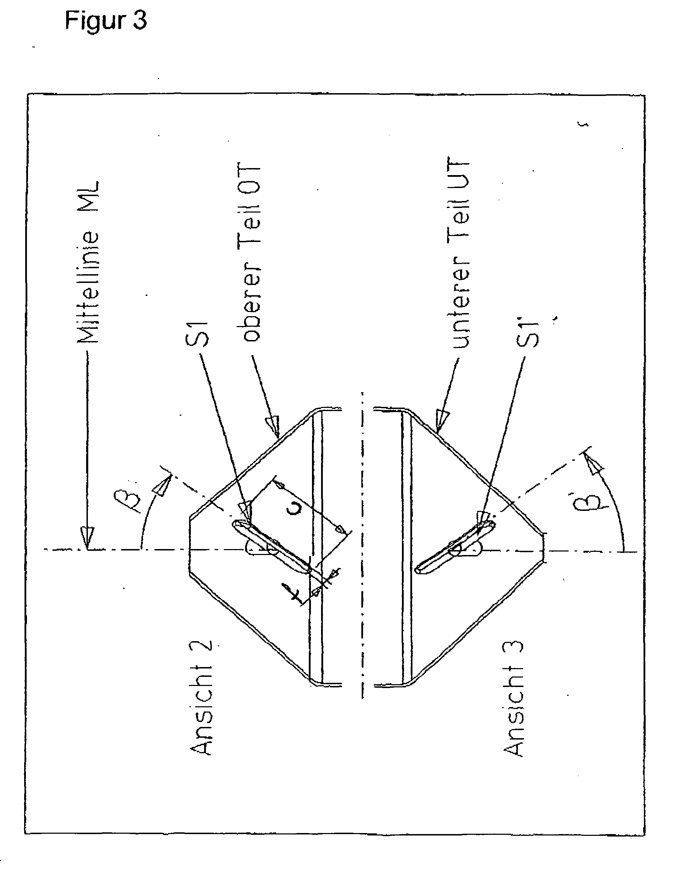

Stromstörer vom Typ S1 sind dadurch gekennzeichnet, dass sie gemäß Figur 1 auf der Wandung des Doppelkonusmischers in der Flucht der Drehachse D angeordnet sind und in einem Winkel β bzw β', wie in Figur 3 dargestellt, gegen die Mittellinie ML verdreht sind. Durch die Größe der Winkel β und β' relativ zur Mittellinie ML wird die Stärke der axialen Förderwirkung eingestellt.

Beispielsweise können, wie in Figur 3 dargestellt, im oberen konischen Teil OT des Mischers Stromstörer S1 mit mathematisch negativer Orientierung des Winkels β zur Mittellinie ML eingebaut sein, während im gegenüberliegenden unteren konischen Teil UT des Mischers Stromstörer S1' mit mathematisch positiver Orientierung des Winkels β' relativ zu Mittellinie ML eingebaut sind. Diese Anordnung wird im Rahmen der vorliegenden Erfindung als symmetrische Anordnung von S1 und S1' zueinander verstanden. Durch eine solche symmetrische Anordnung wird eine gleiche Förderrichtung von S1 und S1' bewirkt, die in Abhängigkeit der Drehrichtung der Drehachse des Doppelkonusmischers jeweils in axialer Richtung nach außen oder jeweils in axialer Richtung nach innen gerichtet ist.

Theoretisch können die Winkel β und β' je nach Eigenschaften des zu mischenden Gutes und je nach Mischaufgabe Absolutwerte von 0° bis 90° annehmen. Erfindungsgemäß weisen die Winkel β und β' Absolutwerte von 15° bis 50° auf.

Grundsätzlich können die Winkel β bzw. β' der jeweils eingesetzten Stromstörer innerhalb eines erfindungsgemäßen Doppelkonusmischers variieren, wobei bevorzugt alle Stromstörer vom Betrag her um den selben Winkel gegen die Mittellinie ML des Mischers verdreht sind.

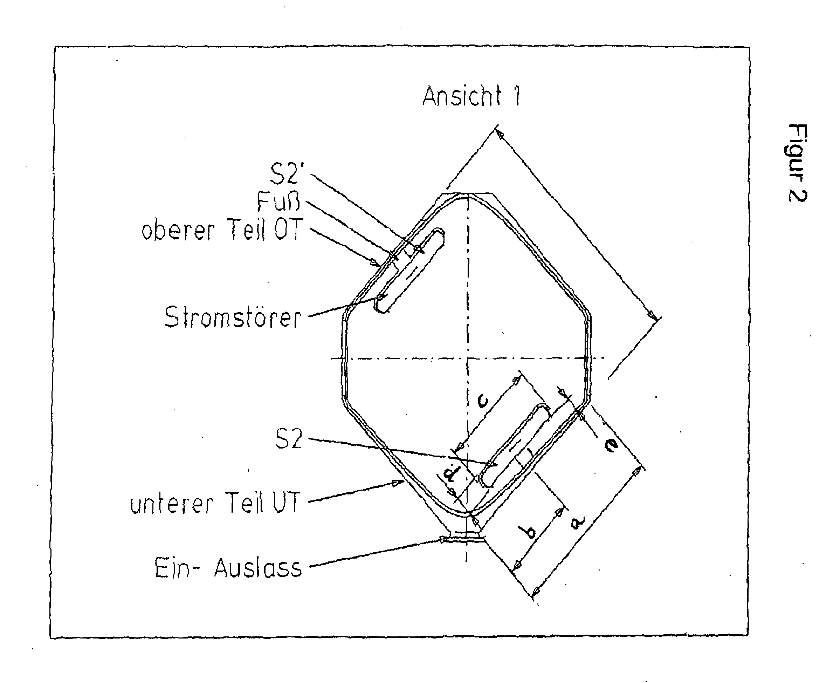

Der Stromstörer vom Typ S2 ist dadurch gekennzeichnet, dass er auf einer Ansichtsebene AE positioniert ist, die um den Winkel α oder bei S2' um den Winkel α' gegenüber der Drehachse D verdreht ist (vgl. Figur 1). Auf der Ansichtsebene AE ist der Stromstörer vom Typ S2 bzw. S2' nicht verdreht. Die Stärke der axialen Förderwirkung wird durch die Größe der Winkel α und α' bestimmt. Die axiale Förderrichtung wird zum einen dadurch bestimmt, ob die Winkel α und α' wie in Figur 1 dargestellt in der gleichen mathematischen Richtung gegenüber der Drehachse D verdreht sind oder in entgegengesetzter mathematischer Richtung und zum anderen durch Anordnung der Stromstörer vom Typ S2 im oberen konischen Teil OT oder unteren konischen Teil UT des Doppelkonusmischers. Bei der in Figur 2 gezeigten möglichen Anordnung, ist S2 im unteren konischen Teil UT mit mathematisch negativer Orientierung von α dargestellt und ist S2' im oberen konischen Teil OT mit ebenfalls mathematisch negativer Orientierung von α' dargestellt. Diese im Sinne dieser Erfindung symmetrische Anordnung der Stromstörer S2 und S2' bewirkt, dass die Förderrichtung von S2 und S2' gleich ist, nämlich in Abhängigkeit der Drehrichtung des Doppelkonusmischers jeweils in axialer Richtung nach außen oder jeweils in axialer Richtung nach innen.

Theoretisch können die Winkel α und α' Werte von 0° bis 90° annehmen, wobei die Stromstörer S2 bzw. S2' für den Grenzfall der Winkel α und α' von 90° keine axiale Mischwirkung mehr haben. Erfindungsgemäß betragen die Absolutwerte für die Winkel α und α' 20° bis 60°.

Die in den Figuren 1 bis 3 dargestellten Stromstörer S1, S1', S2 und S2' sind in diesem Beispiel so angeordnet, dass sie in Summe eine symmetrische Anordnung bilden, d.h. dass in Anhängigkeit von der Drehrichtung des Mischers alle hier gezeigten Stromstörer nach außen (vgl. Figur 1) oder alle hier gezeigten Stromstörer nach innen (vgl. Figur 1) fördern.

Der in dieser Erfindung beschriebene Doppelkonusmischer kann wie oben beschrieben mit verschiedensten Kombinationen von Stromstörern unterschiedlicher Typen ausgerüstet werden, bevorzugt wird eine symmetrische Anordnung von Stromstörern hinsichtlich der Förderichtung, in der beide Typen S1 und S2 jeweils symmetrisch zur Anwendung kommen, besonders bevorzugt wird eine symmetrische Anordnung von Stromstörern hinsichtlich Förderrichtung und Stärke der axialen Förderwirkung, in der beide Typen S1 und S2 jeweils symmetrisch zur Anwendung kommen, und bei der die Winkel β und β' und α und α' vom Betrag jeweils paarweise gleich groß sind und bei der alle Stromstörer bei vorgegebener Drehrichtung des Doppelkonusmischers eine axiale Förderrichtung nach außen bewirken.

Die erfindungsgemäße axiale Förderwirkung kann nicht nur durch die beschriebenen Stromstörer vom Typ S1 und S2 erreicht werden sondern u.a. auch durch Kombinationen dieser Typen von Stromstörern.

Die Größe der Stromstörer wird durch ihre Länge (c), durch ihre Höhe (d), durch ihre Dicke (f) und durch ihren Abstand zur Wandung des Mischbehälters (e) bestimmt (vgl. Figuren 2 und 3). Die Anordnung auf der Wandung des Mischbehälters wird durch das Verhältnis der Strecke (b) zur Strecke (a) gekennzeichnet.

Die Stromstörer im Rahmen dieser Erfindung haben im Verhältnis zur Länge der Wandung des Mischbehälters (a) eine Länge (c), die typischerweise 1,0 * (a) bis 0,15 * (a), bevorzugt 0,2 * (a) bis 0,8 * (a), besonders bevorzugt 0,3 * (a) bis 0,75 * (a) ist.

Die Höhe (d) der Stromstörer im Verhältnis zur Strecke (L) des Mischbehälters beträgt typischerweise 0,01 * (L) bis 0,2 * (L), bevorzugt 0,02 * (L) bis 0,15 * (L), besonders bevorzugt 0,03 * (L) bis 0,1 *(L).

Ein Mindestmaß für die Dicke (f) der Stromstörer wird durch die mechanische Festigkeit des verwendeten Materials (i.d.R. Stahl) vorgegeben. Bei emaillierten Stromstörern müssen zudem noch weitere fertigungstechnische Besonderheiten, z.B. hinsichtlich der zugelassenen Wärmeausdehnung und vorgegebener Mindestradien, beachtet werden. Eine weitere Erhöhung der Dicke (f) der Stromstörer bringt keine verfahrenstechnischen Vorteile. Typischerweise liegt die Dicke (f) bei 0,2 * (d) bis 0,5 * (d).

Der Abstand (e) der Stromstörer zur Wandung des Mischbehälters beeinflusst zum einen die Mischwirkung und zum anderen Aspekte der Reinigbarkeit und der Restentleerung. Bei emaillierten Stromstörern und Doppelkonusmischern sind auch hier die besonderen fertigungstechnischen Besonderheiten zu beachten, die ggf. Mindestmaße erfordern. Der Abstand (e) der Stromstörer zur Wandung des Mischbehälters beträgt typischerweise 10 mm bis 250 mm, bevorzugt 40 mm bis 200 mm, besonders bevorzugt 60 mm bis 150 mm.

Das Verhältnis der Strecke (b) zur Strecke (a) kennzeichnet die Anordnung der Stromstörer auf der Wandung des Mischbehälters. Typische Werte für (b)/(a) sind 0,1 bis 0,9, bevorzugt 0,2 bis 0,8 und besonders bevorzugt 0,3 bis 0,7.

Grundsätzlich wird der eigentliche Stromstörer auf einem oder ggf. mehreren Füßen montiert (Figur 2). Insbesondere bei emaillierten Behältern bestehen hier fertigungstechnische Einschränkungen, die z.B. in WO 2004/073847 beschrieben sind. Für den Einsatz in einem Doppelkonusmischer werden bevorzugt Stromstörer mit nur einem Fuß eingesetzt, wodurch insbesondere im Falle der Polysaccharidverarbeitung eine gute Restentleerung und eine gute Reinigbarkeit gewährleistet wird.

Die so ausgerüsteten erfindungsgemäßen Doppelkonusmischer besitzen Volumnia von typischerweise 10 dm³ bis 25.000 dm³, bevorzugt 100 dm³ bis 8.000 dm³, besonders bevorzugt 1000 dm³ bis 6.500 dm³.

Grundsätzlich sind sowohl nicht innenbeschichtete als auch innenbeschichtete Ausführungsformen der erfindungsgemäßen Doppelkonusmischer denkbar. Insbesondere ist es durch eine Innenbeschichtung aus Emaille möglich, auch Prozessschritte, bei denen reaktive und aggressive Reaktanden und Medien eingesetzt werden, mittels eines solchen erfindungsgemäßen Mischers durchzuführen.

Die erfindungsgemäßen Mischer eignen sich besonders für den Bereich der Feststoffverarbeitung und Prozessierung. Insbesondere bei der Herstellung und Verarbeitung von niedermolekularen Polysaccharidderivaten, bevorzugt auf Stärke oder Cellulosebasis, sind die vorstehend beschriebenen Doppelkonusmischer von besonderer Bedeutung.

Ein weiterer Gegenstand der vorliegenden Erfindung ist daher ein Verfahren zur Herstellung oder Verarbeitung von niedermolekularen Polysaccharidderivaten, bei dem ein Doppelkonusmischer der erfindungsgemäßen Art verwendet wird.

Geeignete Prozessschritte, bei denen ein solcher Mischer Verwendung findet, sind zum Beispiel der Molekulargewichtsabbau durch Einwirkung von gegebenenfalls gasförmigen Säuren wie Chlorwasserstoff.

Bevorzugte Polysaccharide sind solche auf Stärke- und Cellulosebasis.

## Patentansprüche

1. Doppelkonusmischer umfassend einen um die Drehachse D drehbaren Mischbehälter aus einer Trommel mit zylindrischem Mittelteil und je Zylinderöffnung einem angesetzten Konus, wobei der Mischbehälter im Inneren stromstörende Einbauten aufweist, welche so angeordnet sind, dass sie zu einer Vermischung des Füllguts in axialer Orientierung bezogen auf die Drehachse D führen, **dadurch gekennzeichnet, dass** dieser stromstörende Einbauten vom Typ S1 und S1' aufweist, die auf der Wandung des Mischbehälters in der Flucht der Drehachse D angeordnet sind und in einem Winkel β bzw. β' gegen eine senkrecht zur Drehachse verlaufende Mittellinie ML verdreht sind und/oder stromstörende Einbauten vom Typ S2 und S2' aufweist, die jeweils auf einer Ansichtsebene AE positioniert sind, die um den Winkel α bzw. bei S2' um den Winkel α' gegenüber der Drehachse D verdreht ist und dass die Winkel α und α' Absolutwerte von 20° bis 60° und die Winkel β und β' Absolutwerte von 15° bis 50° aufweisen.

2. Doppelkonusmischer gemäß Anspruch 1, **dadurch gekennzeichnet, dass** der Mischbehälter im Inneren emailliert ist.

3. Doppelkonusmischer gemäß Anspruch 1 oder 2, **dadurch gekennzeichnet, dass** die Anzahl der eingesetzten Stromstörer so gewählt ist, dass beide Konus jeweils die gleiche Anzahl an Stromstörern aufweisen und innerhalb eines Konus die stromstörenden Einbauten so angeordnet sind, dass in den gleichgroßen Halbräumen, in die ein Konus durch eine senkrecht zur Drehachse D stehende Mittelebene M geteilt wird, die jeweils gleiche Anzahl an Stromstörern vorliegt.

4. Doppelkonusmischer gemäß einem der Ansprüche 1 bis 3, **dadurch gekennzeichnet, dass** der Mischbehälter insgesamt 2 bis 8 stromstörende Einbauten als Stromstörer aufweist.

5. Doppelkonusmischer gemäß einem der Ansprüche 1 bis 4, **dadurch gekennzeichnet, dass** die stromstörenden Einbauten derart im Mischbehälter angeordnet sind, dass eine in Summe symmetrische Anordnung vorliegt, so dass in Abhängigkeit von der Drehrichtung des Mischbehälters die durch die stromstörenden Einbauen verursachten, in axialer Richtung verlaufenden Strömungen entweder nach innen zur Mitte des Mischbehälters oder bei umgekehrt orientierter Drehrichtung des Mischbehälters nach außen zur Wandung des Mischbehälters verlaufen.

6. Doppelkonusmischer gemäß einem der Ansprüche 1 bis 5, **dadurch gekennzeichnet, dass** jeweils die Winkelpaare α und α' bzw. β und β' vom Betrag her jeweils gleich groß sind und die Winkel α und α' mathematisch gleich zueinander und die Winkel β und β' mathematisch entgegengesetzt zueinander orientiert sind.

7. Doppelkonusmischer gemäß einem der Ansprüche 1 bis 6, **dadurch gekennzeichnet, dass** die stromstörenden Einbauten eine Länge (c) von 0,3 bis 0,75 mal die Länge (a) der Wandung des Mischbehälters, eine Dicke (f) von 0,2 bis 0,5 mal der Höhe (d), einen Abstand (e) zur Wandung des Mischbehälters von 60 mm bis 150 mm und ein Verhältnis von (b) zur Länge der Wandung des Mischbehälters (a) von 0,3 bis 0,7 aufweisen.

8. Doppelkonusmischer gemäß einem der Ansprüche 1 bis 7, **dadurch gekennzeichnet, dass** die stromstörenden Einbauten jeweils nur über einen Fuss auf der Wandung des Mischbehälters aufgebracht sind.

9. Verwendung eines Doppelkonusmischers gemäß einem der Ansprüche 1 bis 8 zur Verarbeitung von Polysaccharidderivaten.

10. Verwendung gemäß Anspruch 9, **dadurch gekennzeichnet, dass** ein Polysaccharid oder Polysaccharidderivat unter Einwirkung von gegebenenfalls gasförmigen Säuren unter Verringerung des Molekulargewichts umgesetzt wird.

11. Verwendung gemäß Anspruch 9 oder 10, **dadurch gekennzeichnet, dass** der Doppelkonusmischer derart ausgestaltet ist und betrieben wird, dass bei vorgegebener Drehrichtung des Mischbehälters die durch die stromstörenden Einbauten verursachten, in axialer Richtung verlaufenden Strömungen nach außen zur Wandung des Mischbehälters verlaufen.

## Claims

1. A double-cone mixer comprising a mixing vessel rotatable about an axis of rotation D comprising a drum with a cylindrical middle portion and a cone mounted on each open end of the cylinder, the mixing vessel having inside baffles, arranged so that they lead to mixing of product in an axial orientation relative to the axis of rotation D, wherein the mixer has baffles of type S1 and S1', which are arranged on the wall of the mixing vessel in alignment with the axis of rotation D and are rotated at an angle β or β' relative to a middle line ML perpendicular to the axis of rotation and/or has baffles of type S2 and S2', which in each case are positioned on a plane of projection AE that is rotated through angle α or in the case of S2' through angle α' relative to the axis of rotation D and wherein the angles α and α' have absolute values from 20° to 60° and the angles β and β' have absolute values from 15° to 50°.

2. The double-cone mixer according to Claim 1, wherein the mixing vessel is internally enamelled.

3. The double-cone mixer according to Claim 1 or 2, wherein the number of baffles used is selected so that both cones each have the same number of baffles and within one cone baffles are arranged so that in equal-sized half-spaces, into which a cone is divided by a middle plane M that is perpendicular to the axis of rotation D, there is in each case the same number of baffles.

4. The double-cone mixer according to one of the Claims 1 to 3, wherein the mixing vessel has a total of 2 to 8 baffles.

5. The double-cone mixer according to one of the Claims 1 to 4, wherein the baffles are arranged in the mixing vessel in such a way that an overall symmetrical arrangement is obtained, so that depending on the sense of rotation of the mixing vessel, product flows running in the axial direction caused by the baffles run either inwards towards the center of the mixing vessel, or with the opposite sense of rotation of the mixing vessel, outwards towards the wall of the mixing vessel.

6. The double-cone mixer according to one of the Claims 1 to 5, wherein the pair of angles α and α' or β and β' are of equal magnitude (absolute value) and angles α and α' are mathematically equal to each other and angles β and β' are mathematically of opposite orientation to one another.

7. The double-cone mixer according to one of the Claims 1 to 6, wherein the baffles have a length (c) from 0.3 to 0.75 times the length (a) of a wall of the mixing vessel, a height (d) from 0.03 to 0.1 times a segment (L) of the mixing vessel, a thickness (f) from 0.2 to 0.5 times the height (d), a distance (e) from the wall of the mixing vessel from 60 mm to 150 mm and a ratio of (b) to the length of the wall of the mixing vessel (a) from 0.3 to 0.7.

8. The double-cone mixer according to one of the Claims 1 to 7, wherein the baffles are in each case attached by just one foot to the wall of the mixing vessel.

9. Use of a double-cone mixer according to one of the claims 1 to 8 for processing of polysaccharide derivatives.

10. Use according to Claim 9, wherein a polysaccharide or polysaccharide derivative is processed under the action of if necessary gaseous acids with reduction of the molecular weight.

11. Use according to Claim 9 or 10, wherein the double-cone mixer is designed and operated in such a way that for a given sense of rotation of the mixing vessel, the flows running in the axial direction, caused by the baffles, run outwards towards the wall of the mixing vessel.

## Revendications

1. Mélangeur biconique, comprenant un récipient de mélange rotatif autour de l'axe de rotation D, constitué d'un tambour avec une partie centrale cylindrique et un cône rapporté par ouverture de cylindre, dans lequel le récipient de mélange présente des éléments incorporés perturbateurs de courant à l'intérieur, qui sont aménagés de manière à provoquer un mélange du produit de remplissage dans l'orientation axiale par rapport à l'axe de rotation D, **caractérisé en ce que** celui-ci présente des éléments incorporés perturbateurs de courant de types S1 et S1', qui sont aménagés sur la paroi du récipient de mélange dans l'alignement avec l'axe de rotation D et présentent une torsion sous un angle β ou β' par rapport à une ligne centrale ML s'étendant perpendiculairement à l'axe de rotation, et/ou présente des éléments incorporés perturbateurs de courant de types S2 et S2', qui sont positionnés respectivement sur un plan de vision AE, qui présente une torsion de l'angle α ou, pour S2', de l'angle α' par rapport à l'axe de rotation D et **en ce que** les angles α et α' présentent des valeurs absolues de 20 ° à 60 ° et les angles β et β' des valeurs absolues de 15 ° à 50 °.

2. Mélangeur biconique selon la revendication 1, **caractérisé en ce que** le récipient de mélange est émaillé à l'intérieur.

3. Mélangeur biconique selon la revendication 1 ou 2, **caractérisé en ce que** l'on choisit le nombre d'éléments perturbateurs de courant utilisés de sorte que les deux cônes présentent respectivement le même nombre d'éléments perturbateurs de courant et **en ce que** l'on aménage les éléments incorporés perturbateurs de courant à l'intérieur d'un cône de sorte qu'il y ait le même nombre respectif d'éléments perturbateurs de courant dans les demi-espaces de même volume, dans lesquels un cône est divisé par un plan central M disposé perpendiculairement à l'axe de rotation D .

4. Mélangeur biconique selon l'une quelconque des revendications 1 à 3, **caractérisé en ce que** le récipient de mélange présente, au total, 2 à 8 éléments incorporés perturbateurs de courant comme éléments perturbateurs de courant.

5. Mélangeur biconique selon l'une quelconque des revendications 1 à 4, **caractérisé en ce que** l'on aménage les éléments incorporés perturbateurs de courant dans le récipient de mélange de manière à avoir au total un agencement symétrique, de sorte qu'en fonction du sens de rotation du récipient de mélange, les écoulements provoqués par les éléments incorporés perturbateurs de courant et s'étendant dans la direction axiale s'écoulent vers l'intérieur jusqu'au centre du récipient de mélange ou, dans le cas d'un sens de rotation orienté en sens inverse du récipient de mélange, vers l'extérieur jusqu'à la paroi du récipient de mélange.

6. Mélangeur biconique selon l'une quelconque des revendications 1 à 5, **caractérisé en ce que** les paires d'angles respectives α et α' ou β et β' sont respectivement, au total, de même grandeur et les angles α et α' sont mathématiquement orientés de manière égale l'un par rapport à l'autre et les angles β et β' sont mathématiquement orientés de manière opposée l'un par rapport à l'autre.

7. Mélangeur biconique selon l'une quelconque des revendications 1 à 6, **caractérisé en ce que** les éléments incorporés perturbateurs de courant présentent une longueur (c) de 0,3 à 0,75 fois la longueur (a) de la paroi du récipient de mélange, une épaisseur (f) de 0,2 à 0,5 fois la hauteur (d), une distance (e) à la paroi du récipient de mélange de 60 mm à 150 mm et un rapport de (b) à la longueur de la paroi du récipient de mélange (a) de 0,3 à 0,7.

8. Mélangeur biconique selon l'une quelconque des revendications 1 à 7, **caractérisé en ce que** les éléments incorporés perturbateurs de courant ne sont appliqués respectivement que sur un pied sur la paroi du récipient de mélange.

9. Utilisation d'un mélangeur biconique selon l'une quelconque des revendications 1 à 8 pour traiter des dérivés de polysaccharides.

10. Utilisation selon la revendication 9, **caractérisée en ce que** l'on fait réagir un polysaccharide ou un dérivé de polysaccharide sous l'effet d'acides éventuellement gazeux en réduisant le poids moléculaire.

11. Utilisation selon la revendication 9 ou 10, **caractérisée en ce que** le mélangeur biconique est conçu et exploité de sorte que, dans un sens de rotation prédéfini du récipient de mélange, les écoulements provoqués par les éléments incorporés perturbateurs de courant et s'étendant dans la direction axiale s'écoulent vers l'extérieur jusqu'à la paroi du récipient de mélange.
